# EUROPEAN PATENT SPECIFICATION

(11) **EP 2 824 893 B1**
(45) Date of publication and mention of the grant of the patent: **13.06.2018**
(21) Application number: 13757716.9
(22) Date of filing: 01.03.2013
(51) Int. Cl.: G06F 12/0871, G06F 12/0804, G06F 12/12, H04L 29/08, G06F 12/08, G06F 3/06, G06F 17/30

(54) **DATA STORAGE METHOD AND DEVICE**
DATENSPEICHERUNGSVERFAHREN UND VORRICHTUNG
PROCÉDÉ ET DISPOSITIF DE STOCKAGE DE DONNÉES

(30) Priority: 09.03.2012 CN 201210061555
(43) Date of publication of application: 14.01.2015
(73) Proprietor: Tencent Technology (Shenzhen) Company Limited, Shenzhen, Guangdong 518044 (CN)
(72) Inventor: LIN, Aimin, Shenzhen Guangdong 518044 (CN); TANG, Jiong, Shenzhen Guangdong 518044 (CN); WANG, Junshuai, Shenzhen Guangdong 518044 (CN)
(74) Representative: Tothill, John Paul
(86) International application number: PCT/CN2013/072042
(87) International publication number: WO 2013/131443

(56) References cited:
- WO-A1-2011/149564
- CN-A- 1 545 033
- CN-A- 101 398 821
- CN-A- 102 035 881
- US-A1- 2004 250 020
- US-A1- 2005 182 906
- US-A1- 2009 063 769

## Description

### Technical Field

The present disclosure relates to computer technologies, and more particularly, to a method and an apparatus for storing data.

### Background

With the development of computer technologies, game technologies develop rapidly. The number of people participated in a game is increased from single to multiple. As the number of people increases, the amount of data generated during the game is increased, and thus service logic becomes more complicated. It is important for game manufactures to effectively store data generated by the service logic so as to provide better services to users.

In conventional solutions, when the data generated by the service logic is stored, the data generated by the service logic is transmitted to a network storage device via a network and stored in a database on the network storage device. A buffer space is established on the network storage device, and data having high exchange frequency is stored in the buffer space, so as to improve the speed of the data exchange.

However, in the game technology, the data are updated frequently, and it is required to access the network storage device via the network repeatedly no matter whether the data generated by service logic is stored in the buffer space of the network storage device or stored in the database of the network storage device. The procedure of accessing the network storage device via the network may reduce storage efficiency, and may influence the efficiency of subsequent data exchange. In addition, if data structures of the database are fixed and not extendable, requirements of data structure variation as required by the service logic will not be satisfied.

US 2005/0182906 A1 discloses systems and methods for maintaining cache coherency between a first controller and a redundant peer controller while reducing communication overhead processing involved in the coherency message exchange. Header or meta-data information is accumulated in a buffer in a first controller along with updated cache data (if any) and forwarded to the peer controller. The accumulating information may be double buffered so that a buffer is filling as a previously filled buffer is transmitting to the peer controller. The peer controller processes the received information to update its mirror cache to maintain coherency with the first controller's cache memory with respect to dirty data.

US 2009/063769 A1 discloses that a RAID apparatus includes a plurality of recording devices, a first adaptor connected to a first interface which is connected to a high-level apparatus, a controller for controlling processing of data transmitted by the high-level apparatus, and a second adaptor that connects to a second interface connected to a plurality of recording devices. The controller has a first memory area in which said data are stored, a second memory area used for a write-back of the data in said plurality of recording devices, a write-back information control unit controlling a write-back type of data stored in the first memory area and a usage state of the second memory area, a write-back data determination unit for determination of data to be write-back based on the write-back information, and a write-back execution unit for executing a write-back of the data to be written back on the plurality of recording devices.

US 2004/0250020A1 discloses a disc array unit, which manages a shared memory as a plurality of shared memory blocks, each consisting of a group of cache pages, and performs cache control on these cache pages through use of LRU links, provides an unavailable link as an LRU link to indicate that an area is not available for use a chche page; and, when said shared memory block is used not as a cache memory but for another use, prevents said shared memory block from being used as a cash memory by re-linking all cache pages belonging to said shared memory block from an LRU link to such unavailable links individually.

WO 2011/ 149564 A1 discloses that in embodiments of the present invention improved capabilities are described for a gaming method, comprising the steps of: (a) upon receiving a gaming initiation request from an initiating live participant, providing a computer generated multi-player game environment in which the initiating live participant can play a game and invite at least one additional participant to join the game; (b) in response to receiving a second participant invitation from the live participant, requesting a second live participant to join the game; and (c) following the second participant invitation, providing a wait period for receiving acceptance of a second live participant to join the game prior to starting the game, where if the second live player accepts within the wait period the two player play live, and if not, then a simulated live opponent is provided with inter-game interaction so that the simulated line opponent appears to be a live opponent.

CN 102035881 A discloses a data caching method of a cloud storage system, belonging to the technical field of computer data storage. The method comprises the steps of: taking a flash disk as a carrier of the cloud storage system, starting a computer from the flash disk and loading an operation system in a system area of the flash disk into a memory of the computer; scanning data block caching files in a local data caching area by the cloud storage system and storing each obtained data block caching file in the memory; capturing the operation commands of an upper application program by the cloud storage system through a virtual file system layer, wherein the operation commands comprise the steps of creating the files, modifying the files, reading the files and deleting the files, and the new data blocks formed after the operation are cached in the local data caching area in file form;; and storing the formed new data block caching files to a cloud storage server by a network communication module and obtaining data block caching files from the cloud storage server when the needed data block caching files do not exist in the local data caching area. The method improves the response speed and realizes the access of the cloud storage data under the situation of off-network.

CN 1545033 A discloses an LUN CACHE method for an FC-SAN storage subsystem, and its character: it is implemented by a logic unit number cache (LUN CACHE) module operating in an embedded system of I/O processing nodes in the FC-SAN; it uses an improved CACHE displacement arithmetic to enhance the utilization ratio of CACHE, so as to complete the read-write operation in the I/O processing nodes by caching but not sending to a concrete SCSI device; uses a delayed write technique to update the data on the background, extremely improving the repose time; uses a mechanism of read-write lock to ensure a consistency of data sharing among multiple users; makes the LUN CACHE completely transparent for a user by the good design of interface devices. It is tested that the read-write operation performance is extremely enhanced by using the LUN CACHE than before.

CN 101398821 A discloses a network memory method and a system on the basis of local cache and virtual file system technique; the method assumes one or more pieces of hard disk equipment on the equipment layer of an video/audio workstation operation system; the virtual hard disk equipment is arranged between an upper layer software module and a local disk; the upper software module operates the virtual hard disks in the form of visiting normal drivers; the virtual hard disk equipment is connected with network memory equipment by data; when the upper layer software carries out write-file operation, one copy of the file is written respectively in the cache of the local workstation and the network memory equipment; when the upper layer software carries out the read-file operation, the data memorized in the local cache is preferably used. The method and the system reduce the usage stress of the network disc array, reduce the requirement on the network bandwidth, break no program production when limit condition occurs to the system, and ensure the reliable running of the system at high speed.

### Summary

Embodiments of the present disclosure provide a method and an apparatus for storing data, so as to improve data storage efficiency while improve the extendibility of data structure, and satisfy the requirement of the service logic. The present invention is defined in the appended independent claims to which reference should be made.

Advantageous features are set out in the appended dependent claims. The data is stored locally by configuring the extendable two-dimensional data buffer array in the local shared memory according to the preset configuration policy and storing the data on the network storage device into the sub data block corresponding to the data according to the requirements of the service logic, thereby improving the efficiency of data storage and data exchange. The extendibility of the data structure is improved since the two-dimensional data buffer array for storing data is extendable, and thus the requirements of the service logic are satisfied. In addition, the data in the local shared memory and the network storage device are synchronized by synchronizing modified data to the network storage device after the data in the data block is modified, and thus data loss is avoided.

### Brief Description of the Drawings

In order to describe technical solutions of embodiments of the present disclosure clearly, accompanying drawings used in embodiments of the present disclosure are described below. The described accompanying drawings are parts of embodiments of the present disclosure.
Figure 1 is a schematic flowchart illustrating a method for storing data according to an embodiment of the present disclosure.
Figure 2 is a schematic diagram illustrating a structure of a system for storing data according to an embodiment of the present disclosure.
Figure 3 is a schematic flowchart illustrating a method for storing data according to another embodiment of the present disclosure.
Figure 4 is a schematic diagram illustrating transformation of data statuses according to an embodiment of the present disclosure.
Figure 5 is a schematic diagram illustrating a logic data block according to an embodiment of the present disclosure.
Figure 6 is a schematic diagram illustrating relationship tables according to an embodiment of the present disclosure.
Figure 7 is a schematic diagram illustrating an apparatus for storing data according to an embodiment of the present disclosure.
Figure 8 is a schematic diagram illustrating an apparatus for storing data according to an embodiment of the present disclosure.
Figure 9 is a schematic diagram illustrating an apparatus for storing data according to an example of the present disclosure.
Figure 10 is a schematic diagram illustrating an apparatus for storing data according to an example of the present disclosure.
Figure 11 is a schematic diagram illustrating an apparatus for storing data according to an embodiment of the present disclosure.
Figure 12 is a schematic diagram illustrating an apparatus for storing data according to an embodiment of the present disclosure.
Figure 13 is a schematic diagram illustrating an apparatus for storing data according to an embodiment of the present disclosure.

### Detailed Description

In order to make the object, technical solution and merits of the present disclosure clearer, the present disclosure will be illustrated in detail hereinafter with reference to the accompanying drawings and specific embodiments.

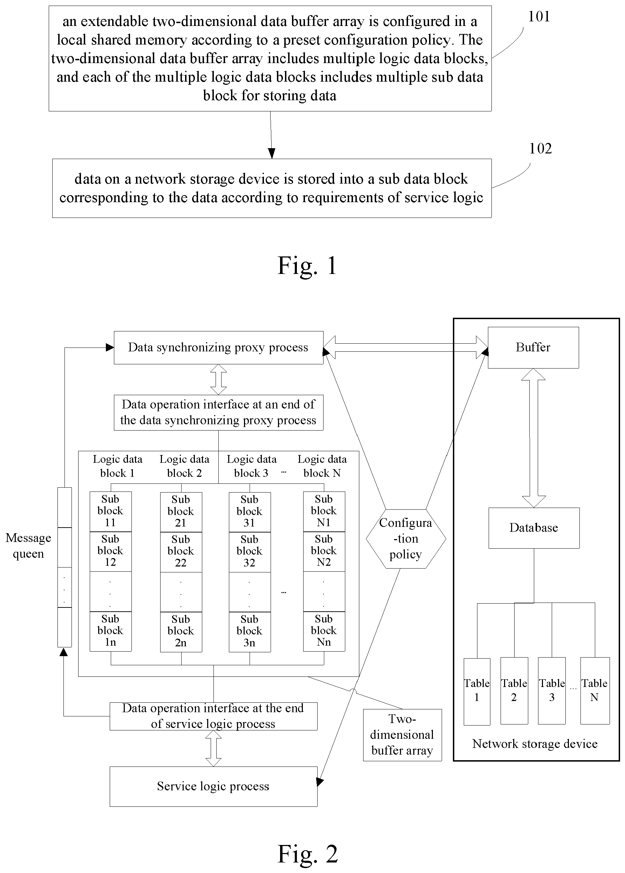

According to an embodiment of the present disclosure, a method for storing data is provided. Referring to Figure 1, the method includes the following processing.

At 101, an extendable two-dimensional data buffer array is configured in a local shared memory according to a preset configuration policy. The two-dimensional data buffer array includes multiple logic data blocks, and each of the multiple logic data blocks includes multiple sub data block for storing data.

At 102, data on a network storage device is stored into a sub data block corresponding to the data according to requirements of service logic.

According to an embodiment, after the extendable two-dimensional data buffer array is configured in the local shared memory according to the preset configuration policy, the following processing is further included. A data status is configured for each of the multiple sub data blocks according to a data storage situation in each of the multiple sub data blocks. The data status is one of a free status, a loading status, a normal status, a modify status, a remove status and a tick remove status.

According to an embodiment, after the data on the network storage device is stored into the sub data block corresponding to the data according to requirements of the service logic, the following processing is further included. Data stored in the sub data block corresponding to the service logic is modified, and the modified data is synchronized to the network storage device. According to an embodiment, the following processing is performed when synchronizing the modified data to the network storage device, the data status of each of the multiple the sub data blocks are polled regularly, and when the data status of a sub data block is the modify status, the data in this sub data block is synchronized to the network storage device. Further, after the data in this sub data block is synchronized to the network storage device, the data status of this sub data block is modified into the normal status.

According to an embodiment, after the data on the network storage device is stored into the sub data block corresponding to the data according to the requirements of the service logic, the following processing is further included. Data stored in the sub data block corresponding to the service logic is synchronized to the network storage device, and the shared memory corresponding to the sub data block is removed. According to an embodiment, the following processing is performed when synchronizing the data stored in the sub data block corresponding to the service logic to the network storage device, the data status of each of the multiple sub data blocks are queried, and the data of a sub data block in the tick_remove status is synchronized to the network storage device. Further, after the data of the sub data block in the tick remove status is synchronized to the network storage device, the data status of the sub data block in the tick remove status is modified into the free status.

According to an embodiment, when storing the data on the network storage device into the sub data block corresponding to the data according to the requirements of the service logic, a sub data block in the free status is selected from all of the multiple sub data blocks, and the data on the network storage device is stored into the selected sub data block according to the requirements of the service logic. Further, after the data on the network storage device is stored into the selected sub data block, the data status of the selected sub data block is modified from the free status into the loading status. After the loading of the data is completed, the data status of the selected sub data block is modified from the loading status to the normal status.

According to an embodiment, after the extendable two-dimensional data buffer array is configured in the local shared memory according to the preset configuration policy, a relationship table of the two-dimensional data buffer array and the network storage device, is established and updated according to the changing of data in the sub data blocks of the two-dimensional data buffer array. The relationship table is stored on the network storage device, and records a data storage situation of each of the sub data blocks of the two-dimensional data buffer array. Each of the logic data blocks in the two-dimensional data buffer array corresponds to one relationship table, and each of the sub data blocks in the logic data block corresponds to a record in the relationship table.

By using the method according to the embodiment, the extendable two-dimensional data buffer array is configured in the local shared memory according to the preset configuration policy, and the data on the network storage device is stored into the sub data block corresponding to the data according to the requirements of the service logic, Therefore, the data are stored locally, and the efficiency of data storage and data exchange is improved. The extendibility of the data structure is improved since the two-dimensional data buffer array for storing data is extendable, and thus the requirements of the service logic are satisfied. In addition, after the data in the sub data block is modified, the modified data is sent to the network storage device, so that the data in the local shared memory and the network storage device are synchronized, and thus data loss is avoided.

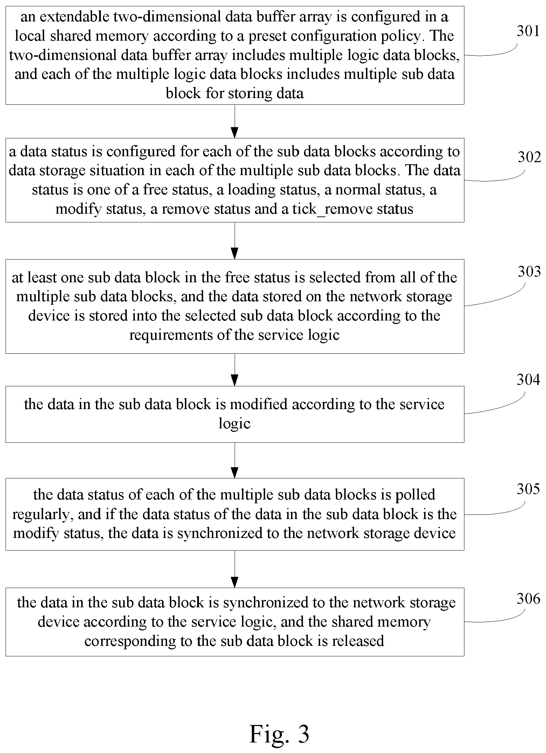

According to another embodiment of the present disclosure, a method for storing data is provided. According to the method, an extendable two-dimensional data buffer array is configured in a local shared memory, and data continuously varies as system runs are stored both in a network storage device and sub data blocks of the two-dimensional data buffer array. For convenience of description, the method will be described with reference to a data storage system shown in Figure 2. Referring to Figure 3, the method includes the following processing.

At 301, an extendable two-dimensional data buffer array is configured in a local shared memory according to a preset configuration policy. The two-dimensional data buffer array includes multiple logic data blocks, and each of the multiple logic data blocks includes multiple sub data block for storing data.

According to an embodiment, the preset configuration policy is used to configure the number of the logic data blocks in the two-dimensional data buffer array and to configure the number and the capacity of the sub data blocks in each of the logic data block, thereby extending the data structure. In an embodiment of the present disclosure, the extending of the data structure includes increasing or reducing the number of the logic data blocks in the two-dimensional data buffer array, and increasing or reducing the number and capacity of the sub data blocks in each of the logic data block. The configuration policy may be set according to practical requirements. For embodiment, the number of the logic data blocks and the number and capacity of the sub data blocks configured in the configuration policy may be set according to a data structure required by the service logic, or may set in other manners. The number of the logic data blocks and the number and capacity of the sub data blocks configured in the configuration policy are not limited in the embodiment. The local shared memory refers to a large capacity memory which may be accessed by different Central Processing Units (CPUs) in a computer system with multiple processors. The local shared memory may be read or written directly, thereby improving processing efficiency of the processors.

At 301, in conjunction with the structure of the data storage system shown in Figure 2, a process may be called to configure the extendable two-dimensional data buffer array in the local shared memory, the process is one of service logic process and a data synchronizing proxy process which is first started. For embodiment, if the service logic process is first launched than the data synchronizing proxy process, the extendable two-dimensional data buffer array may be configured by the service logic process in the local shared memory according to the preset configuration policy, and if the data synchronizing proxy process is first launched than the service logic process, the extendable two-dimensional data buffer array may be configured by the data synchronizing proxy process in the local shared memory according to the preset configuration policy. Regardless of the process used to perform the configuration, application for the local shared memory according to the preset configuration policy is performed first, and then the two-dimensional data buffer array is configured in the applied local shared memory. The configured two-dimensional data buffer array includes multiple logic data blocks, and each of the logic data blocks includes multiple sub data blocks for storing data. The sub data blocks may be identified in a manner of coordinate so as to distinguish the sub data blocks in different logic data blocks. As shown in Figure 2, as an embodiment, the configured two-dimensional data buffer array includes N logic data blocks, and each logic data block includes n sub data blocks, the n^{th} sub data block in the N^{th} logic data block may be identified with two-dimensional data coordinate (N, n).

According to an embodiment, regardless of the manner used for identifying the sub data blocks, each of the sub data blocks may be used to store data. The logic data blocks in the two-dimensional data buffer array, according to logic functions, may be classified into dynamic logic data blocks and static logic data blocks. The sub data blocks in the dynamic logic data blocks are used for storing dynamic data, and the sub data blocks in the static logic data blocks are used for storing static data. The dynamic data includes data which may be loaded, removed and synchronized dynamically, and the shared memory space corresponding to the sub data blocks for storing the dynamic data may be used repeatedly. When taking game player role data in the service logic as an embodiment, role online and offline relate to data synchronizing pulling and storing. The static data is stored in the shared memory, and is not removed once the static data is loaded, so that there is no need to releasing the shared memory space corresponding to the sub data blocks for storing static data, and the static data, such as data of market hall of games, is synchronized to the network storage device using timing mechanism. The logic data blocks are not limited to dynamic logic data blocks or static logic data blocks in the embodiment, and in practice, the logic data blocks may be configured according to the configuration policy.

According to an embodiment, after the two-dimensional data buffer array is configured, the two-dimensional data buffer array is configured in the shared memory, and addresses of the logic data blocks and addresses of the sub data blocks are physical addresses of the shared memory, while an address of the service logic process and an address of the data synchronizing proxy process both are logic addresses. Hence, it is needed that the memory space of the two-dimensional data buffer array is mapped to the memory space of the process configuring the two-dimensional data buffer array, i.e., the physical addresses are translated into logic addresses, so that that the data in the configured two-dimensional data buffer array may be operated by the service logic process and/or data synchronizing proxy process subsequently. The memory space of the two-dimensional data buffer array may be mapped to the memory space of the other process which is not used to configure the two-dimensional data buffer array, after this process is launched.

It is to be noted that, after the two-dimensional data buffer array is configured, the two-dimensional data buffer array and data stored in the two-dimensional data buffer array are maintained successionally and individually, as long as the system is not powered off, the memory is not cleaned or damaged manually. In other words, once the configuration of the two-dimensional data buffer array is completed, the data structure of the two-dimensional data buffer array and data therein is always exist, in the case that the system is not powered off, and the memory exists. If the system is powered off, or the memory is cleaned or damaged, the two-dimensional data buffer array should be re-configured. No matter whether the system is powered off and whether the memory is modified or damaged, the translation between the physical addresses and the logic addresses is required to be performed again, if the service logic process or the data synchronizing proxy process is re-started.

At 302, a data status is configured for each of the sub data blocks according to data storage situation in each of the multiple sub data blocks. The data status is one of a free status, a loading status, a normal status, a modify status, a remove status and a tick_remove status.

According to an embodiment, after the two-dimensional data buffer array is configured at 301, the data status of each of the multiple sub data blocks is set according to the data storage situation in each of the sub data blocks, and the data status of each of the sub data blocks includes, but not limited to the following six data statuses:
1. free: data is to be assigned;
2. loading: data being loaded;
3. normal: dada is loaded;
4. modify: data is modified;
5. remove: data is stored and is being removed;
6. tick remove: if data removal fails, the data status of the sub data block is configured as this status, so that the data may be removed regularly by regularly control until the data is removed successfully.

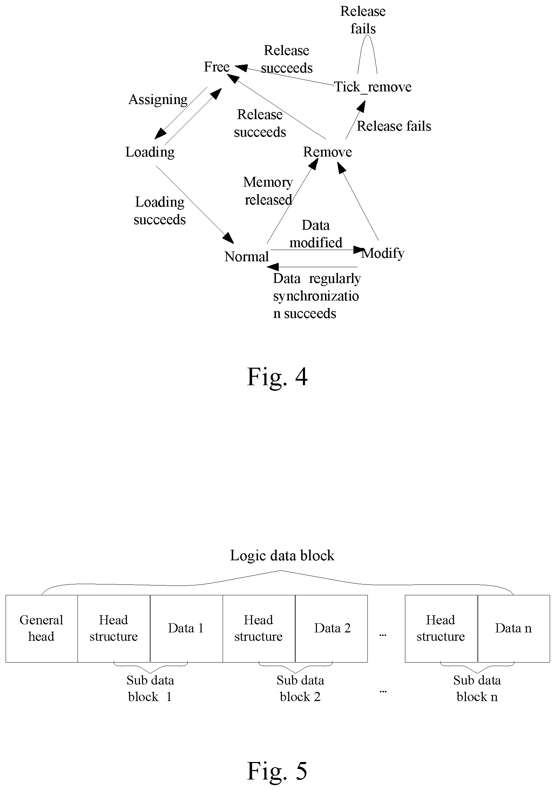

In the procedure of storing and updating the data, the data status of the sub data blocks may vary among the above mentioned six statuses, as shown in Figure 4. When the two-dimensional data buffer array is initially configured, no data is stored in the sub data blocks of the two-dimensional data buffer array, and thus the data statuses of the sub data blocks are free statuses and may be updated timely according to the variation of the data storage subsequently.

After the data status of each of the sub data blocks is configured, the configuration of the two-dimensional data buffer array is completed. Each of the logic data blocks of the two-dimensional data buffer array may be consisted of a general head and sub data blocks. Taking a structure of the logic data block shown in Figure 5 as an embodiment, the general head of the logic data block includes 4 bytes for recording the length of the data stored in the logic data block. Each of the sub data blocks is consisted of a head structure and data, and the head structure of the sub data block may be as follows.

```
  header
   {
  Key // key value corresponding to the data
  Ver //version No. of the data
  Time // modifying time of the data
  Status // status of the data
  }
```

The key value of the data in the sub data block is identical with a key of the data in the network storage device. Hence, no matter whether the data is stored in the local shared memory or stored in the network storage device, the key for each data is unchanged, which facilitates searching for data stored in difference places. After the two-dimensional data buffer array is configured, when a sub data block is assigned with data, the key, ver, time, and status values of the head structure of the sub data block are modified accordingly, and the sub data block will not be assigned with data again, unless the data in the sub data block is removed and the status of the sub data block is the free status. When the data in a sub data block is removed, the data in the sub data block is cleaned accordingly and the key, ver, time and status values of the head structure of the sub data block is modified.

According to an embodiment, since the sub data blocks in the two-dimensional data buffer array are used for storing data, in order to keep the synchronization of the data in the local shared memory and the data in the network storage device, the following processing is performed after configuring the two-dimensional data buffer array.

A relationship table of the two-dimensional data buffer array and the network storage device is established, and the relationship table is updated according to data variation in the sub data blocks of the two-dimensional data buffer array. The relationship table is stored on the network storage device, and records the data storage situation of each of the sub data blocks of the two-dimensional data buffer array.

According to an embodiment, each of the logic data blocks in the two-dimensional data buffer array corresponds to one relationship table, and each of the sub data blocks in the logic data block corresponds to a record in the mapping relationship table.

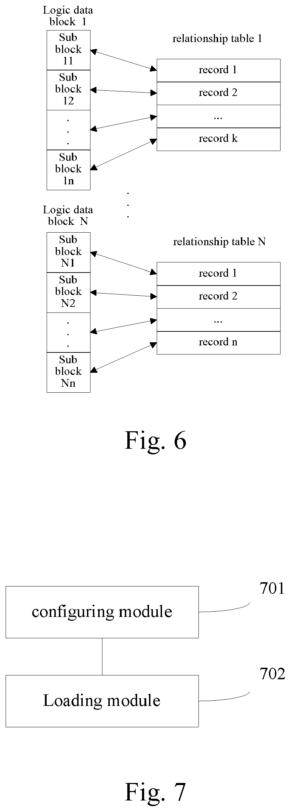

Figure 6 is a schematic diagram illustrating relationship tables according to an embodiment of the present disclosure. As shown in Figure 6, one logic data block in the two-dimensional data buffer array corresponds to one relationship table stored in a database, and the relationship table records a structure of the logic data block. Each of the sub data blocks in the logic data block corresponds to a record in the relationship table, and the size of each data is fixed and corresponds to the size of the structure of the sub data blocks in the logic data blocks. In addition, since the data in the sub data block sometimes may be modified, the record in the relationship table corresponding to the sub data block may be updated accordingly. According to an embodiment, after the relationship table is established, the relationship table is required to be updated according to data variation in the sub data block.

Thus, storage and interaction of the local data are ensured by the configuration operations performed at 301 to 302.

At 303, at least one sub data block in the free status is selected from all of the multiple sub data blocks, and the data stored on the network storage device is stored into the selected sub data block according to the requirements of the service logic.

In this processing, the data stored on the network storage device is stored into the two-dimensional data buffer array of the local shared memory, and thus achieves local data storage, so as to solve the low efficiency problem caused by connecting to the network storage device via the network each time when storing data and performing data exchange. When the data stored on the network storage device is to be stored into the local shared memory, whether there is free memory is to be determined first. Since the data storage situation of each of the sub data blocks is identified by the data status, and thus a sub data block whose data status is the free status may be selected from all of the sub data blocks, and the data stored on the network storage device to be stored into the selected sub data blocks may be determined according to the service logic. The loading procedure in this processing will be described in conjunction with the structure of system for storing data shown in Figure 2.

In Figure 2, the physical addresses of the shared memory are translated into the logic address of each of the service logic process and the data synchronizing proxy process during the configuration of the two-dimensional data buffer array, and thus the address of each of the sub data blocks in the two-dimensional data buffer array may be obtained by the service logic process and the data synchronizing proxy process. When the data on the network storage device is determined to be stored into the local shared memory according to the service logic, the service logic process selects at least one sub data block in the free status from all of the sub data blocks via a data interface of a device where the service logic process is located, obtains coordinates (N, n) of the sub data block to which data is to be loaded. Then a data loading message is sent to the data synchronizing proxy process by a message queue via the data interface of the device where the service logic process is located. The data loading message carries at least the coordinates of the selected sub data block, an operation type and an identifier for the data to be loaded, so that the data synchronizing proxy process will know what operation is to be performed to which sub data block. This processing is for loading data, and thus the operation type carried in the data loading message is "loading" and the identifier for the data to be loaded is used to identify the data in the network storage device to be loaded. In the embodiment, the key value is taken as the identifier for each data, no matter whether the data is stored on the network storage device or stored in the local shared memory.

After receiving the data loading message, the data synchronizing proxy process selects an idle thread in a thread pool, and then the data to be loaded is acquired from the network storage device via the idle thread according to the key value of the data to be loaded carried in the data loading message. In the embodiment, the network storage device stores all data in a database. For the purpose of improving data storage and data exchange efficiency, in the embodiment, calling frequency of the data in the database is determined in advance, and then the data are sorted according to the calling frequency, such as from higher calling frequency to lower calling frequency, and the data having high calling frequency is stored in a buffer space, and thus the data to be loaded may be read by the thread in the data synchronizing proxy process directly from the buffer space, thereby improving the efficiency of reading data. According to an embodiment, the thread in the data synchronizing proxy process may also directly operate the database if it is allowed by the system performance, and it is not limited by the embodiment.

While acquiring the data to be loaded, the thread in the data synchronizing proxy process searches the buffer space for the data to be loaded according to the key value of the data to be loaded carried by the data loading message. If the buffer space includes the data to be loaded, the thread transmits the data to be loaded to the data synchronizing proxy process via a data synchronizing interface between the buffer space and the data synchronizing proxy process. If the buffer space does not include the data to be loaded, the thread searches the database for the data to be loaded, buffers the data to be loaded into the buffer space, and transmits the data to be loaded to the data synchronizing proxy process via the data synchronizing interface between the buffer space and the data synchronizing proxy process. After receiving the data to be loaded, either found from the buffer space directly or found from the database, the data synchronizing proxy process writes the data to be loaded into a corresponding sub data block, i.e., the sub data block corresponding to the coordinates carried by the data loading message, via a data interface of the data synchronizing proxy process. During the loading process, the data status of the sub data block to which data is being loaded is modified from the free status to the loading status. After the loading process is completed, the data status is modified from the loading status to the normal status. Thus, the procedure of loading the data stored on the network storage device to the local shared memory is ended. If the data is required to be called or operated subsequently, it can be done locally rather than by accessing the network storage device via the network. If the data loaded to the local shared memory need to be modified according to the service logic, a modifying process is as follows.

At 304, the data in the sub data block is modified according to the service logic.

According to an embodiment, since the data stored in the local shared memory varies continuously as the system runs, it is likely that the data will be updated during subsequent data exchange, and thus, it is often that the data stored in the sub data block is modified. In the embodiment, triggering conditions for modifying of the data are not limited. For embodiment, the data stored in the sub data block may be modified according to the service logic when a role of a game player changes, or when the state of the role is switched between online and offline. When the data is modified, the service logic process may replace the data stored in the sub data block with the modified data via a data interface of a device where the service logic process is located. After modification is completed, the data status of the sub data block is modified from the normal status to the modify status.

At 305, the data status of each of the multiple sub data blocks is polled regularly, and if the data status of the data in the sub data block is the modify status, the data is synchronized to the network storage device.

According to an embodiment, after the data in the sub data block of the two-dimensional data buffer array is modified, for the purpose of keeping data synchronization between the local shared memory and the network storage device and thus preventing data loss efficiently, the data status of each of the sub data blocks is polled regularly by the data synchronizing proxy process, and if the data status of the data in a sub data block is the modify status, the data is synchronized into the network storage device. According to an embodiment, the data synchronizing proxy process regularly polls the data status of the head structure of each sub data block via a data interface of a device where the data synchronizing proxy process is located. If it is determined that the data status of a sub data block is modify status, which means that the data in the sub data block is modified data, the data synchronizing proxy process acquires the modified data and the key value of the modified data from the sub data block via a data interface of a device where the data synchronizing proxy process is located, and selects an idle thread from a thread pool. The data in the buffer space having the same key value with that of the modified data is replaced with the modified data via the idle thread. After that, the network storage device may immediately synchronize the modified data in the buffer space to the database, or may check the data updated in the buffer space and synchronize the data modified in a certain time period into the database one time.

According to an embodiment, in order to prevent the cast that the same modified data is synchronized repeatedly to the network storage device in subsequent processing, after synchronizing the data in the sub data block whose data status is the modify status to the network storage device, the data synchronizing proxy process modifies the data status of the sub data block whose data status was the modify status to the normal status.

Further, according to an embodiment, when the data in the sub data block of the two-dimensional data buffer array is modified frequently, the data needs to be synchronized into the network storage device frequently. If the data synchronizing proxy process has no sufficiency time to response, an overtime phenomenon may occur when synchronizing the data. To solve this problem, according to an embodiment, a data synchronizing overtime time is configured according to a predetermined configuration policy, and the time spent by the data synchronizing proxy process in synchronizing the data is monitored. If the time spent by the data synchronizing proxy process in synchronizing the data exceeds the data synchronizing overtime time, a data service overtime status code may be returned to the service logic process via an data interface of a device where the service logic process is located, and the service logic process may determine whether to synchronize the data again.

In addition, besides the data synchronizing operation triggered by the modification of the data in the sub data block, according to the service logic, the data in the sub data block of the two-dimensional data buffer array may no longer vary as the system runs and thus permanence storage of the data is required. In order to achieve the permanence storage of the data, the following data synchronization operations are required.

At 306, the data in the sub data block is synchronized to the network storage device according to the service logic, and the shared memory corresponding to the sub data block is released.

The synchronization operation at 306 is different from that at 305. The synchronization operation at 305 is triggered by the modification of data in a sub data block of the two-dimensional data buffer array, so as to keep data consistency between the local shared memory and the network storage device. The synchronization operation at 306 is triggered in the case that it is determined according to the service logic that data in a sub data block of the two-dimensional data buffer array no longer vary as the system runs and the permanence storage of the data is required. Since the data will not vary as the system runs, and thus the shared memory occupied by such data may be released.

According to an embodiment, as shown in Figure 2, when the service logic needs to release memory space, the data status of the sub data block storing the data to be removed is modified via an data interface of a device where the service logic process is located called by the service logic process, i.e., the data status of the sub data block storing the data to be removed is modified from the normal status to the remove status, and then a data synchronizing releasing message is sent to the data synchronizing proxy process through a message queue via the data interface. The data synchronizing releasing message carries coordinates of the sub data block storing the data to be removed, an operation type and an identifier of the data to be removed, so that the data synchronizing proxy process may determine what operation is to be performed to which sub data block. Since this operation is synchronizing releasing operation, the operation type carried in the data synchronizing releasing message is "remove", and the identifier of the data to be removed is used to identify the data to be removed in the sub data block of the two-dimensional data buffer array. According to an embodiment, the key value is taken as the identifier of each data, no matter whether the data is stored on the network storage device or stored in the local shared memory.

After receiving the data synchronizing releasing message, the data synchronizing proxy process obtains the data from the sub data block corresponding to the coordinates carried in the data synchronizing releasing message by calling an data interface of a device where the data synchronizing proxy process is located, and selects an idle thread in a thread pool, so that the data obtained from the sub data block is synchronized to the database in the network storage device via the idle thread, and stored by the database over a prolonged period.

According to an embodiment, during data synchronizing releasing operation performed by the data synchronizing proxy process, the data interface of a device where the service logic process is located regularly detects whether the data is removed completely. If it is detected that no data is included in the sub data block corresponding to the coordinates carried in the data synchronizing releasing message, it is determined that the removing is completed, i.e., the shared memory occupied by the sub data block is released. The data status of the sub data block is modified to the free status from the remove status, and thus the sub data block may be reassigned for loading data. If it is detected that the sub data block corresponding to the coordinates carried in the data synchronizing releasing message includes data, it is determined that the removing is not completed. If the removing is not completed after a predetermined period, it is determined that the removing fails, i.e., the shared memory occupied by the sub data block is not released successfully, and the data status of the sub data block is modified to the tick_remove status from the remove status. The predetermined period is not limited in the embodiment.

According to an embodiment, if the data status of the sub data block is the tick remove, to release the shared memory occupied by the sub data block successfully, the data status of each sub data block is queried regularly by the data synchronizing proxy process. If the sub data block having the data status of the tick remove is found, the processing of synchronizing the data of the sub data block into the network storage device performed by the data synchronizing proxy process is triggered. After the data interface of the device where the service logic process is located detects that the data in the sub data block having the data status of the tick remove status is removed successfully, the data status of the sub data block is modified to the free status from the tick remove status, so that the sub data block may be reassigned for loading data.

According to the methods provided by the embodiments of the present disclosure, the data is stored locally by configuring the extendable two-dimensional data buffer array in the local shared memory according to the preset configuration policy and storing the data on the network storage device into the sub data block corresponding to the data according to the requirements of the service logic, thereby improving the efficiency of data storage and data exchange. The extendibility of the data structure is improved since the two-dimensional data buffer array for storing data is extendable, and thus the requirements of the service logic are satisfied. In addition, the data in the local shared memory and the network storage device are synchronized by synchronizing modified data to the network storage device after the data in the data block is modified, and thus data loss is avoided.

According to an embodiment of the present disclosure, an apparatus for storing data is provided. The apparatus is used to perform the method for storing data according to the above embodiment. Referring to Figure 7, the apparatus includes a configuring module 701 and a loading module 702.

The configuring module 701 is to configure an extendable two-dimensional data buffer array in a local share memory according to a preset configuration policy. The two-dimensional data buffer array includes multiple logic data blocks, and each of the multiple logic data blocks includes multiple sub data block for storing data.

The loading module 702 is to store data on a network storage device into a sub data block corresponding to the data according to the requirement of service logic.

The local shared memory refers to a large capacity memory which may be accessed by different CPUs in a computer system with multiple processors. The local shared memory may be read or written directly, thereby improving the processing efficiency of the processors. The operations performed by the configuring module 701 for configuring the extendable two-dimensional data buffer array in the local shared memory may refer to the processing at 301 in the above embodiment, which will not be described herein.

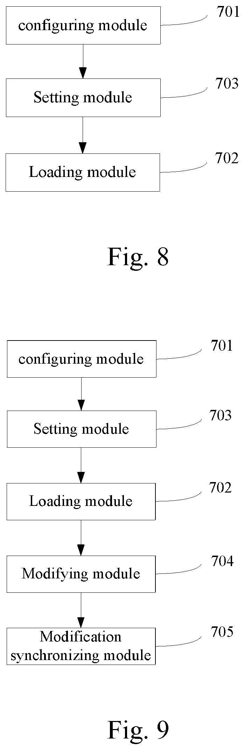

Referring to Figure 8, the apparatus may further include a setting module 703. The setting module 703 is to set a data status for each of the multiple sub data blocks according to data storage situation in each of the multiple sub data blocks. The data status is one of: a free status, a loading status, a normal status, a modify status, a remove status and a tick remove status. The operations performed by the setting module 703 for setting the data status may refer to the processing at 302 described in the above embodiment, which will not be described herein.

Referring to Figure 9, the apparatus may further include a modifying module 704 and a modification synchronizing module 705. The modifying module 704 is to modify the data stored in the sub data block according to service logic. The modification synchronizing module 705 is to synchronize the data modified by the modifying module 704 to the network storage device.

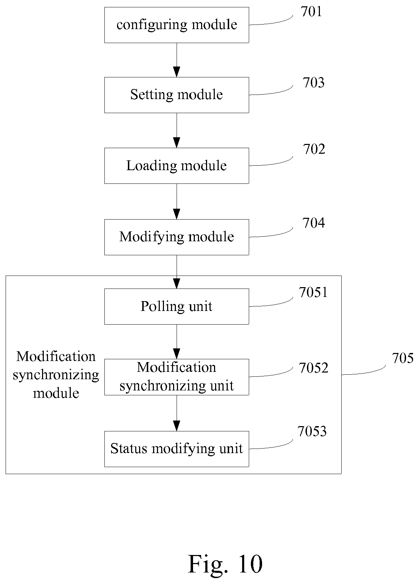

Referring to Figure 10, the modification synchronizing module 705 includes a polling unit 7051 and a modification synchronizing unit 7052. The polling unit 7051 is to regularly poll the data status of each of the multiple sub data blocks. The modification synchronizing unit 7052 is to synchronize the data in the sub data block having the data status of the modify status polled by the polling unit 7051 to the network storage device. According to an embodiment, the modification synchronizing module 705 further includes a status modifying unit 7053 to modify the data status of the sub data block from the modify status to the normal status. The operations performed by the polling unit of the modification synchronizing module 705 for polling the data status of the sub data blocks and the operations performed by the modification synchronizing unit 7052 for modifying the data may refer to the processing at 304 in the above embodiment, which will not be described repeatedly herein.

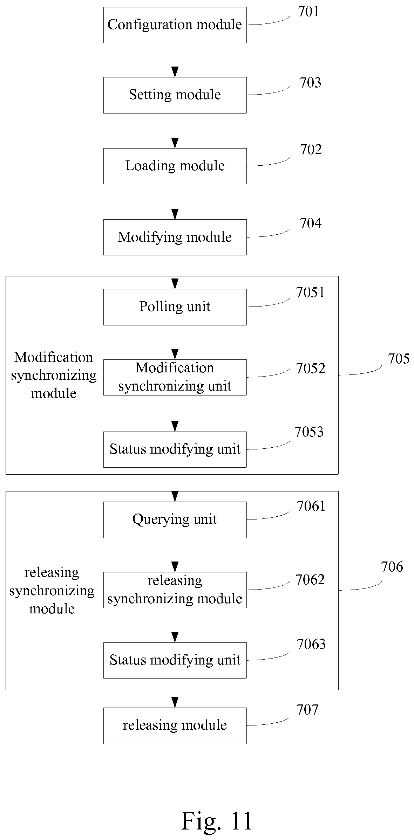

Referring to Figure 11, the apparatus may further include a releasing synchronizing module 706 and a releasing module 707.

The releasing synchronizing module 706 is to synchronize the data in the sub data block to the network storage device according to service logic. The releasing module 707 is to remove the shared memory corresponding to the sub data block, after the releasing synchronizing module 706 synchronizes the data in the sub data block to the network storage device according to the service logic.

Further, referring to Figure 11, the releasing synchronizing module 706 includes a querying unit 7061 and a releasing synchronizing unit 7062. The querying unit 7061 is to query the data status of each of the multiple sub data blocks. The releasing synchronizing unit 7062 is to synchronize the data in the sub data block having the data status of the tick_remove status queried by the querying unit to the network storage device. Further, the releasing synchronizing module 706 further includes a status modifying unit 7063 to modify the data status of the sub data block having the data status of the tick remove status to the normal status. The operations performed by the querying unit 7061 for querying the data status and the operations performed by the releasing synchronizing unit 7062 may refer to the processing at 305 in the above embodiment, which will not be described herein.

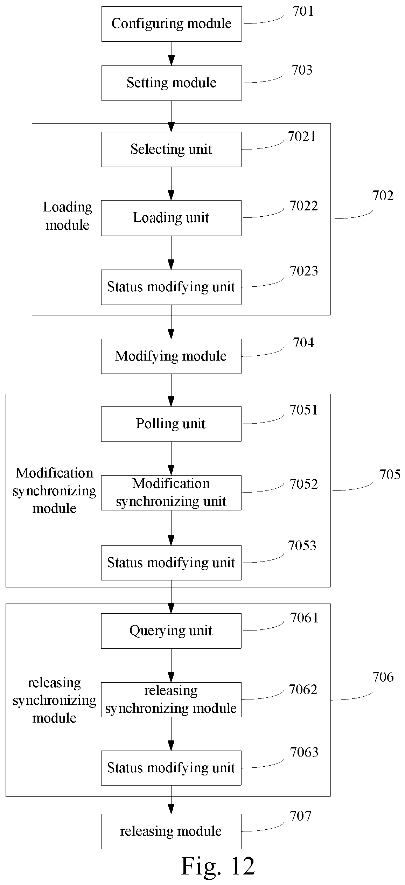

Referring to Figure 12, the loading module 702 includes a selecting unit 7021 and a loading unit 7022. The selecting unit 7021 is to select a sub data block having the data status of the free status from all of the multiple sub data blocks. The loading unit 7022 is to store the data stored on the network storage device into the sub data block selected by the selecting unit 7021 according to requirements of service logic. Further, the loading module 702 further includes a status modifying unit 7023 to modify the data status of the selected sub data block from the free status to the loading status. After the loading of the data is completed, the status modifying unit 7023 is to modify the data status of the selected sub data block from the loading status to the normal status. The manner used by the selecting unit 7021 for selecting the sub data block and the operations performed by the loading unit 7022 for loading data may refer to the processing at 303 in the above embodiment, which will not be described herein.

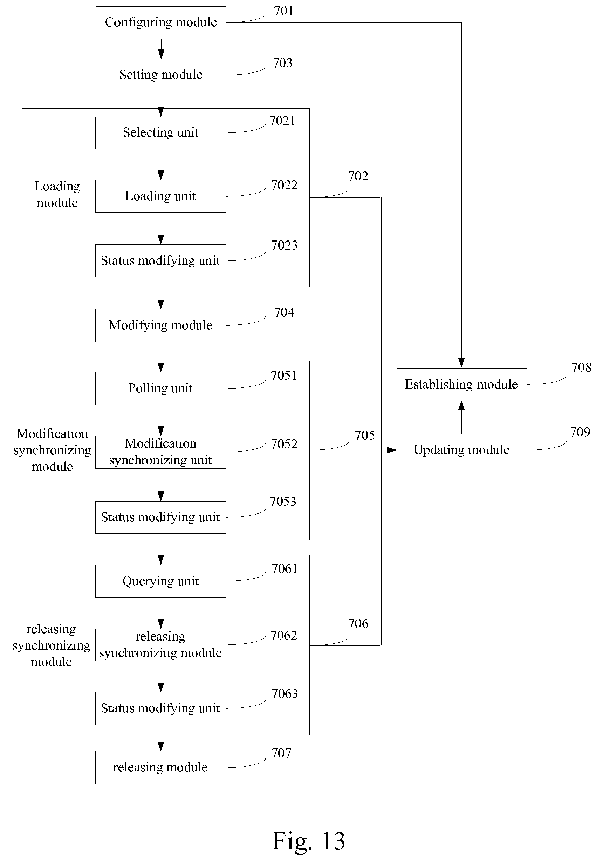

Referring to Figure 13, the apparatus further includes an establishing module 708 and an updating module 709. The establishing module 708 is to establish a relationship table between the two-dimensional data buffer array and the network storage device, and record data storage situation of each of the sub data blocks of the two-dimensional data buffer array. The relationship table is stored on the network storage device. The updating module 709 is to update the relationship table according to data variation in the sub data blocks of the two-dimensional data buffer array. Each of the logic data blocks in the two-dimensional data buffer array corresponds to one relationship table, and each of the sub data blocks in the logic data block corresponds to a record in the relationship table.

According to the apparatus provided by the embodiments of the present disclosure, the data is stored locally by configuring the extendable two-dimensional data buffer array in the local shared memory according to the preset configuration policy and storing the data on the network storage device into the sub data block corresponding to the data according to the requirements of the service logic, thereby improving the efficiency of data storage and data exchange. The extendibility of the data structure is improved since the two-dimensional data buffer array for storing data is extendable, and thus the requirements of the service logic are satisfied. In addition, the data in the local shared memory and the network storage device are synchronized by synchronizing modified data to the network storage device after the data in the data block is modified, and thus data loss is avoided.

It is to be noted that, when storing data, the apparatus for storing data according to the embodiment is divided into function modules by way of embodiment only. In practice, the functions may be performed by different function modules as required, i.e., the internal structure of the apparatus may be divided into different functional modules to perform all or part functions described above. In addition, the apparatus for storing data according to the embodiment and the method for storing data belongs to a general concept; the embodiments related to the apparatus will not be described herein.

The methods, modules and devices described herein may be implemented by hardware, machine-readable instructions or a combination of hardware and machine-readable instructions. Machine-readable instructions used in the embodiments disclosed herein may be stored in storage medium readable by multiple processors, such as hard drive, CD-ROM, DVD, compact disk, floppy disk, magnetic tape drive, RAM, ROM or other proper storage device. Or, at least part of the machine-readable instructions may be substituted by specific-purpose hardware, such as custom integrated circuits, gate array, FPGA, PLD and specific-purpose computers and so on.

A machine-readable storage medium is also provided, which is to store instructions to cause a machine to execute a method as described herein. Specifically, a system or apparatus having a storage medium that stores machine-readable program codes for implementing functions of any of the above embodiments and that may make the system or the apparatus (or CPU or MPU) read and execute the program codes stored in the storage medium.

In this situation, the program codes read from the storage medium may implement any one of the above embodiments, thus the program codes and the storage medium storing the program codes are part of the technical scheme.

The storage medium for providing the program codes may include floppy disk, hard drive, magneto-optical disk, compact disk (such as CD-ROM, CD-R, CD-RW, DVD-ROM, DVD-RAM, DVD-RW, DVD+RW), magnetic tape drive, Flash card, ROM and so on. Optionally, the program code may be downloaded from a server computer via a communication network.

It should be noted that, alternatively to the program codes being executed by a computer, at least part of the operations performed by the program codes may be implemented by an operation system running in a computer following instructions based on the program codes to realize a technical scheme of any of the above embodiments.

In addition, the program codes implemented from a storage medium are written in a storage in an extension board inserted in the computer or in a storage in an extension unit connected to the computer. In this embodiment, a CPU in the extension board or the extension unit executes at least part of the operations according to the instructions based on the program codes to realize a technical scheme of any of the above embodiments.

Although described specifically throughout the entirety of the instant disclosure, representative embodiments of the present disclosure have utility over a wide range of applications, and the above discussion is not intended and should not be construed to be limiting, but is offered as an illustrative discussion of aspects of the disclosure.

## Claims

1. A method for storing data, comprising:
configuring (101) an extendable two-dimensional data buffer array in a local shared memory according to a preset configuration policy; the two-dimensional data buffer array comprising multiple logic data blocks, and each of the multiple logic data blocks comprising multiple sub data blocks for storing data, wherein the local shared memory is accessed by different Central Processing Units (CPUs) in a computer system with multiple processors;
storing (102) data stored on a network storage device into a selected sub data block corresponding to the data according to requirements of service logic;
and **characterized in that**
the method further comprises:
after configuring the extendable two-dimensional data buffer array in the local shared memory according to the preset configuration policy and before storing data stored on the network storage device into a selected sub data block corresponding to the data according to the requirements of the service logic, setting (302) a data status for each of the multiple sub data blocks according to data storage situation in each of the multiple sub data blocks; the data status comprising one of a free status, a loading status, a normal status, a modify status, a remove status and a tick_remove status;
whereby, after storing data stored on the network storage device into the selected sub data block corresponding to the data according to the requirements of the service logic, the method further comprises:
querying the data status of each of the multiple sub data blocks (305, 7061);
synchronizing data in one sub data block to the network storage device when a data status of said one sub data block is a tick remove status, wherein the data status of the sub data block is configured as the tick remove status if data removal for the shared memory occupied by said one sub data block fails (305, 7062); and
releasing (305, 707) the shared memory corresponding to said one sub data block.

2. The method of claim 1, after storing data from the network storage device into the sub data block corresponding to the data according to the requirements of the service logic and before querying the data status of each of the multiple sub data blocks, further comprising:
modifying data stored in one sub data block according to the service logic, and
synchronizing the data modified to the network storage device.

3. The method of claim 2, wherein synchronizing the data modified to the network storage device comprises:
polling (305) the data status of each of the multiple sub data blocks regularly, and synchronizing data in a sub data block to the network storage device when a data status of the sub data block is a modify status;
wherein optionally the method further comprises, after synchronizing the data in the sub data block to the network storage device:
modifying the data status of the sub data block from a modify status to a normal status.

4. The method of claim 1, wherein the method further comprises, after synchronizing the data in the sub data block to the network storage device:
modifying the data status of the sub data block from a tick remove status to a normal status.

5. The method of claim 1, wherein storing the data stored on the network storage device into the sub data block corresponding to the data according to the requirements of the service logic comprises:
selecting a sub data block having a data status of a free status from all of the multiple sub data blocks, and storing the data stored on the network storage device into the selected sub data block according to the requirements of the service logic;
wherein optionally the method further comprises, after storing the data stored on the network storage device into the selected sub data blocks:
modifying the data status of the selected sub data block from a free status to a loading status; and
modifying the data status of the selected sub data block from the loading status to a normal status after the loading of the data is completed.

6. The method of any one of claims 1 to 5, wherein the method further comprises, after configuring the extendable two-dimensional data buffer array in the local shared memory according to the preset configuration policy:
establishing a relationship table between the two-dimensional data buffer array and the network storage device; and updating the relationship table according to data variation in the sub data blocks of the two-dimensional data buffer array; the relationship table being stored on the network storage device and recording data storage situation of each of the sub data blocks of the two-dimensional data buffer array; and each of the logic data blocks in the two-dimensional data buffer array corresponding to one relationship table, and each of the sub data blocks in the logic data block corresponding to one record in the relationship table.

7. An apparatus for storing data, comprising:
a local shared memory that is accessed by different Central Processing Units , CPUs, in a computer system with multiple processors;
a configuration module (701), configured to configure an extendable two-dimensional data buffer array in the local shared memory according to a preset configuration policy; the two-dimensional data buffer array comprising multiple logic data blocks, and each of the multiple logic data blocks comprising multiple sub data blocks for storing data; a loading module (702), configured to store data stored on a network storage device into a selected sub data block corresponding to the data according to requirements of service logic;
and **characterized in that**
the apparatus further comprises:
a setting module (703), which, after the configuration module has configured the extendable two-dimensional data buffer array in the local shared memory according to the preset configuration policy and before the loading module stores the data stored on the network storage device into a selected sub data block corresponding to the data according to the requirements of the service logic, is configured to set a data status for each of the multiple sub data blocks according to data storage situation in each of the multiple sub data blocks; the data status comprising one of a free status, a loading status, a normal status, a modify status, a remove status and a tick remove status;
a releasing synchronizing module (706), configured to, after the loading module has stored the data stored on the network storage device into the selected sub data block corresponding to the data according to the requirements of the service logic, query the data status of each of the multiple sub data blocks (7061), and to synchronize the data in one sub data block to the network storage device, when a data status of said one sub data block queried by the querying unit is a tick remove status, wherein the data status of the sub data block is configured as the tick remove status if data removal for the shared memory occupied by said one sub data block fails (7062); and
a releasing module (707), configured to release the shared memory corresponding to said one sub data block (7063), after the releasing synchronizing module synchronizes the data in the sub data block to the network storage device.

8. The apparatus of claim 7, further comprising:
a modifying module (704), configured to, after the loading unit has stored the data stored on the network storage device into the sub data block corresponding to the data according to the requirements of the service logic and before the query module queries the data status of each of the multiple sub data blocks, modify data stored in one sub data block according to the service logic; and
a modification synchronizing module (705), configured to, after the loading unit has stored the data stored on the network storage device into the sub data block corresponding to the data according to the requirements of the service logic and before the query module queries the data status of each of the multiple sub data blocks, synchronize the data modified by the modifying module to the network storage device.

9. The apparatus of claim 8, wherein the modification synchronizing module (705) comprises:
a polling unit (7051), configured to poll the data status of each of the multiple sub data blocks regularly; and
a modification synchronizing unit (7052), configured to synchronize data in a sub data block to the network storage device, when a data status of the sub data block polled by the polling unit is a modify status;
wherein optionally the modification synchronizing module further comprises:
a status modifying unit (7053), configured to modify the data status of the sub data block from a modify status to a normal status.

10. The apparatus of claim 7, wherein the releasing synchronizing module further comprises:
a status modifying unit (7063), configured to modify the data status of the sub data block from a tick remove status to a normal status.

11. The apparatus of claim 7, wherein the loading module (702) comprises:
a selecting unit (7021), configured to select a sub data block having a data status of a free status from all of the multiple sub data blocks; and
a loading unit (7022), configured to store the data stored on the network storage device into the sub data block selected by the selecting unit according to the requirements of the service logic;
wherein optionally the loading module further comprises:
a status modifying unit (7023), configured to modify the data status of the sub data block selected by the selecting unit from a free status to a loading status; and modifying the data status of the sub data block selected by the selecting unit from the loading status to a normal status after the loading of the data is completed.

12. The apparatus of any one of claims 7 to 11, further comprising:
an establishing module (708), configured to establish a relationship table between the two-dimensional data buffer array and the network storage device; the relationship table being stored on the network storage device and recording data storage situation of each of the sub data blocks of the two-dimensional data buffer array; and
an updating module (709), to update the relationship table according to data variation in the sub data blocks of the two-dimensional data buffer array;
wherein each of the logic data block in the two-dimensional data buffer array corresponds to one relationship table, and each of the sub data blocks in the logic data block corresponds to one record in the relationship table.

## Patentansprüche

1. Verfahren zum Speichern von Daten, umfassend:
Konfigurieren (101) einer erweiterbaren, zweidimensionalen Datenpufferanordnung in einem lokalen, gemeinsam genutzten Speicher gemäß einer vorgegebenen Konfigurationsrichtlinie; wobei die zweidimensionale Datenpufferanordnung mehrere logische Datenblöcke umfasst und jeder der mehreren logischen Datenblöcke mehrere Datenunterblöcke zum Speichern von Daten umfasst, worin verschiedene zentrale Verarbeitungseinheiten (CPUs) in einem Computersystem mit mehreren Prozessoren auf den lokalen gemeinsam genutzten Speicher zugreifen;
Speichern (102) von auf einer Netzwerkspeichervorrichtung gespeicherten Daten in einen ausgewählten, den Daten entsprechenden Datenunterblock gemäß den Anforderungen der Dienstlogik;
und **dadurch gekennzeichnet, dass**
das Verfahren weiterhin umfasst:
nach dem Konfigurieren der erweiterbaren, zweidimensionalen Datenpufferanordnung in dem lokalen, gemeinsam genutzten Speicher gemäß der vorgegebenen Konfigurationsrichtlinie und vor dem Speichern von auf der Netzwerkspeichervorrichtung gespeicherten Daten in einen ausgewählten, den Daten entsprechenden Datenunterblock gemäß den Anforderungen der Dienstlogik,
Festlegen (302) eines Datenstatus für jeden der mehreren Datenunterblöcke gemäß einer Datenspeichersituation in jedem der mehreren Datenunterblöcke; wobei der Datenstatus entweder einen freien Status, einen Ladestatus, einen normalen Status, einen Status Ändern, einen Status Löschen oder einen Status Löschen_markieren umfasst;
wobei das Verfahren nach dem Speichern der auf der Netzwerkspeichervorrichtung gespeicherten Daten in einen ausgewählten, den Daten entsprechenden Datenunterblock gemäß den Anforderungen der Dienstlogik weiterhin umfasst:
Abfragen des Datenstatus jedes der mehreren Datenunterblöcke (305, 7061);
Synchronisieren der Daten in einem Datenunterblock mit der Netzwerkspeichervorrichtung, wenn ein Datenstatus dieses einen Unterdatenblocks ein Status Löschen_markieren ist, worin der Datenstatus des Datenunterblocks als der Status Löschen_markieren konfiguriert ist, falls die Datenlöschung für den gemeinsam genutzten Speicher, der von diesem einen Datenunterblock belegt wird, fehlschlägt (305, 7062); und
Freigeben (305, 707) des gemeinsam genutzten, diesem einen Datenunterblock entsprechenden Speichers.

2. Verfahren nach Anspruch 1, nach dem Speichern von auf der Netzwerkspeichervorrichtung gespeicherten Daten in einen ausgewählten, den Daten entsprechenden Datenunterblock gemäß den Anforderungen der Dienstlogik und vor dem Abfragen des Datenstatus jedes der mehreren Datenunterblöcke weiterhin umfassend:
Ändern von in einem Datenunterblock gespeicherten Daten gemäß der Dienstlogik, und
Synchronisieren der geänderten Daten mit der Netzwerkspeichervorrichtung.

3. Verfahren nach Anspruch 2, worin das Synchronisieren der geänderten Daten mit der Netzwerkspeichervorrichtung weiterhin umfasst:
regelmäßiges Pollen (305) des Datenstatus jedes der mehreren Datenunterblöcke und Synchronisieren von Daten in einem Datenunterblock mit der Netzwerkspeichervorrichtung, wenn ein Datenstatus des Datenunterblocks ein Status Ändern ist;
worin das Verfahren optional weiterhin nach dem Synchronisieren der Daten in dem Datenunterblock mit der Netzwerkspeichervorrichtung umfasst:
Ändern des Datenstatus des Datenunterblocks von einem Status Ändern in einen normalen Status.

4. Verfahren nach Anspruch 1, worin das Verfahren nach dem Synchronisieren der Daten in dem Datenunterblock mit der Netzwerkspeichervorrichtung weiterhin umfasst:
Ändern des Datenstatus des Datenunterblocks von einem Status Löschen_markieren in einen normalen Status.

5. Verfahren nach Anspruch 1, worin das Speichern der auf der Netzwerkspeichervorrichtung gespeicherten Daten in den den Daten entsprechenden Datenunterblock gemäß den Anforderungen der Dienstlogik weiterhin umfasst:
Auswählen eines Datenunterblocks mit einem Datenstatus eines freien Status aus allen der mehreren Datenunterblöcken und Speichern der auf der Netzwerkspeichervorrichtung gespeicherten Daten in den ausgewählten Datenunterblock gemäß den Anforderungen der Dienstlogik;
worin das Verfahren optional nach dem Speichern der auf der Netzwerkspeichervorrichtung gespeicherten Daten in den ausgewählten Datenunterblöcken weiterhin umfasst:
Ändern des Datenstatus des ausgewählten Datenunterblocks von einem freien Status in einen Ladestatus; und
Ändern des Datenstatus des ausgewählten Datenunterblocks vom Ladestatus in einen normalen Status, nachdem das Laden der Daten abgeschlossen ist.

6. Verfahren nach einem der Ansprüche 1 bis 5, worin das Verfahren nach dem Konfigurieren der erweiterbaren, zweidimensionalen Datenpufferanordnung in dem lokalen, gemeinsam genutzten Speicher gemäß der vorgegebenen Konfigurationsrichtlinie weiterhin umfasst:
Festlegen einer Beziehungstabelle zwischen der zweidimensionalen Datenpufferanordnung und der Netzwerkspeichervorrichtung; und Aktualisieren der Beziehungstabelle gemäß einer Datenvariation in den Datenunterblöcken der zweidimensionalen Datenpufferanordnung; wobei die Beziehungstabelle auf der Netzwerkspeichervorrichtung gespeichert wird und Datenspeichersituationen von jedem der Unterdatenblöcke in der zweidimensionalen Datenpufferanordnung erfasst; und wobei jeder der logischen Datenblöcke in der zweidimensionalen Datenpufferanordnung einer Beziehungstabelle entspricht und jeder der Datenunterblöcke in dem logischen Datenblock einem Datensatz in der Beziehungstabelle entspricht.

7. Gerät zum Speichern von Daten, umfassend:
einen lokalen, gemeinsam genutzten Speicher, auf den verschiedene zentrale Verarbeitungseinheiten, CPUs, in einem Computersystem mit mehreren Prozessoren zugreifen;
ein Konfigurationsmodul (701), das so konfiguriert ist, eine erweiterbare zweidimensionale Datenpufferanordnung in dem lokalen, gemeinsam genutzten Speicher gemäß einer vorgegebenen Konfigurationsrichtlinie zu konfigurieren; wobei die zweidimensionale Datenpufferanordnung mehrere logische Datenblöcke umfasst und jeder der mehreren logischen Datenblöcke mehrere Datenunterblöcke zum Speichern von Daten umfasst;
ein Lademodul (702), das so konfiguriert ist, auf einer Netzwerkspeichervorrichtung gespeicherte Daten in einen ausgewählten, den Daten entsprechenden Datenunterblock gemäß den Anforderungen der Dienstlogik zu speichern;
und **dadurch gekennzeichnet, dass**
das Gerät weiterhin umfasst:
ein Festlegemodul (703), das, nachdem das Konfigurationsmodul die erweiterbare, zweidimensionale Datenpufferanordnung in dem lokalen, gemeinsam genutzten Speicher gemäß der vorgegebenen Konfigurationsrichtlinie konfiguriert hat und bevor das Lademodul die auf der Netzwerkspeichervorrichtung gespeicherten Daten in einen ausgewählten, den Daten entsprechenden Datenunterblock gemäß den Anforderungen der Dienstlogik gespeichert hat, so konfiguriert ist, einen Datenstatus für jeden der mehreren Datenunterblöcke gemäß einer Datenspeichersituation in jedem der mehreren Datenunterblöcke festzulegen; wobei der Datenstatus entweder einen freien Status, einen Ladestatus, einen normalen Status, einen Status Ändern, einen Status Löschen oder einen Status Löschen_markieren umfasst;
ein Freigabe-Synchronisierungsmodul (706), das so konfiguriert ist, nachdem das Lademodul die auf der Netzwerkspeichervorrichtung gespeicherten Daten in den ausgewählten, den Daten entsprechenden Datenunterblock gemäß den Anforderungen der Dienstlogik gespeichert hat,
den Datenstatus jedes der mehreren Datenunterblöcke (7061) abzufragen und
die Daten in einem Datenunterblock mit der Netzwerkspeichervorrichtung zu synchronisieren, wenn ein Datenstatus dieses einen, von der Abfrageeinheit abgefragten Unterdatenblocks ein Status Löschen_markieren ist, worin der Datenstatus des Datenunterblocks als der Status Löschen_markieren konfiguriert ist, falls die Datenlöschung für den gemeinsam genutzten Speicher, der von diesem einen Datenunterblock belegt wird, fehlschlägt (7062); und
ein Freigabemodul (707), das so konfiguriert ist, den gemeinsam genutzten, diesem einen Datenunterblock (7063) entsprechenden Speicher freizugeben, nachdem das Freigabe-Synchronisierungsmodul die Daten in dem Datenunterblock mit der Netzwerkspeichervorrichtung synchronisiert hat.

8. Gerät nach Anspruch 7, weiterhin umfassend:
ein Änderungsmodul (704), das so konfiguriert ist, nachdem die Ladeeinheit die auf der Netzwerkspeichervorrichtung gespeicherten Daten in den den Daten entsprechenden Datenunterblock gemäß den Anforderungen der Dienstlogik gespeichert hat und bevor das Abfragemodul den Datenstatus jedes der mehreren Datenunterblöcke abfragt, in einem Datenunterblock gespeicherte Daten gemäß der Dienstlogik zu ändern; und
ein Änderungs-Synchronisierungsmodul (705), das so konfiguriert ist, nachdem die Ladeeinheit die auf der Netzwerkspeichervorrichtung gespeicherten Daten in den den Daten entsprechenden Datenunterblock gemäß den Anforderungen der Dienstlogik gespeichert hat und bevor das Abfragemodul den Datenstatus jedes der mehreren Datenunterblöcke abfragt, die geänderten Daten durch das Änderungsmodul mit der Netzwerkspeichervorrichtung zu synchronisieren.

9. Gerät nach Anspruch 8, worin das Änderungs-Synchronisierungsmodul (705) umfasst:
eine Polling-Einheit (7051), die so konfiguriert ist, den Datenstatus jedes der mehreren Datenunterblöcke regelmäßig zu pollen; und
eine Änderungs-Synchronisierungseinheit (7052), die so konfiguriert ist, Daten in einem Datenunterblock mit der Netzwerkspeichervorrichtung zu synchronisieren, wenn ein Datenstatus des durch die Polling-Einheit gepollten Datenunterblocks ein Status Ändern ist;
worin das Änderungs-Synchronisierungsmodul optional weiterhin umfasst:
eine Status-Änderungseinheit (7053), die so konfiguriert ist, den Datenstatus des Datenunterblocks von einem Status Ändern in einen normalen Status zu ändern.

10. Gerät nach Anspruch 7, worin das Freigabe-Synchronisierungsmodul weiterhin umfasst:
eine Status-Änderungseinheit (7063), die so konfiguriert ist, den Datenstatus des Datenunterblocks von einem Status Löschen_markieren in einen normalen Status zu ändern.

11. Gerät nach Anspruch 7, worin das Lademodul (702) umfasst:
eine Auswahleinheit (7021), die so konfiguriert ist, einen Datenunterblock mit einem Datenstatus eines freien Status aus allen der mehreren Datenunterblöcken auszuwählen; und
eine Ladeeinheit (7022), die so konfiguriert ist, die auf der Netzwerkspeichervorrichtung gespeicherten Daten in den von der Auswahleinheit ausgewählten Datenunterblock gemäß den Anforderungen der Dienstlogik zu speichern;
worin das Lademodul optional weiterhin umfasst:
eine Status-Änderungseinheit (7023), die so konfiguriert ist, den Datenstatus des von der Auswahleinheit ausgewählten Datenunterblocks von einem freien Status in einen Ladestatus zu ändern und den Datenstatus des von der Auswahleinheit ausgewählten Datenunterblocks von dem Ladestatus in einen normalen Status zu ändern, nachdem das Laden der Daten abgeschlossen ist.

12. Gerät nach einem der Ansprüche 7 bis 11, weiterhin umfassend:
ein Festlegungsmodul (708), das so konfiguriert ist, eine Beziehungstabelle zwischen der zweidimensionalen Datenpufferanordnung und der Netzwerkspeichervorrichtung festzulegen; wobei die Beziehungstabelle auf der Netzwerkspeichervorrichtung gespeichert wird und eine Datenspeichersituation jedes der Datenunterblöcke der zweidimensionalen Datenpufferanordnung erfasst; und
ein Aktualisierungsmodul (709) zum Aktualisieren der Beziehungstabelle gemäß einer Datenvariation in den Datenunterblöcken der zweidimensionalen Datenpufferanordnung;
worin jeder der logischen Datenblöcke in der zweidimensionalen Datenpufferanordnung einer Beziehungstabelle entspricht und jeder der Datenunterblöcke in dem logischen Datenblock einem Datensatz in der Beziehungstabelle entspricht.

## Revendications

1. Procédé pour stocker des données, comprenant :
la configuration (101) d'une matrice tampon bidimensionnelle de données pouvant être étendue dans une mémoire partagée locale selon une politique de configuration définie à l'avance; la matrice tampon bidimensionnelle de données comprenant de multiples blocs de données logiques, et chacun des multiples blocs de données logiques comprenant des multiples sous-blocs de données pour stocker des données, dans lequel on peut accéder à la mémoire partagée locale par différentes Unités Centrales de Traitement (CPU) dans un système informatique avec des processeurs multiples ;
le stockage (102) de données stockées dans un dispositif de stockage en réseau dans un sous-bloc sélectionné de données correspondant aux données selon les exigences d'une logique de service ;
et **caractérisé en ce que**
le procédé comprend en outre :
après la configuration de la matrice tampon bidimensionnelle de données pouvant être étendue dans la mémoire partagée locale selon la politique de configuration définie à l'avance et avant le stockage de données stockées sur le dispositif de stockage en réseau dans un sous-bloc sélectionné de données correspondant aux données selon les exigences de la logique de service,
le paramétrage (302) d'un état de données pour chacun des multiples sous-blocs de données selon une situation de stockage de données dans chacun des multiples sous-blocs de données; l'état de données comprenant l'un d'un état libre, d'un état de chargement, d'un état normal, d'un état de modification, d'un état de suppression et d'un état de suppression de pointage ;
moyennant quoi, après le stockage de données stockées dans le dispositif de stockage en réseau dans le sous-bloc sélectionné de données correspondant aux données selon les exigences de la logique de service, le procédé comprend en outre :
l'interrogation sur l'état de données de chacun des multiples sous-blocs de données (305, 7061) ;
la synchronisation des données dans un sous-bloc particulier de données pour le dispositif de stockage en réseau quand un état de données dudit sous-bloc particulier de données est un état de suppression de pointage, dans lequel l'état de données du sous-bloc de données est configuré en tant qu'état de suppression de pointage si la suppression de données pour la mémoire partagée occupée par ledit sous-bloc de données échoue (305, 7062) ; et
la libération (305, 707) de la mémoire partagée correspondant audit sous-bloc de données.

2. Procédé selon la revendication 1, après le stockage de données en provenance du dispositif de stockage en réseau dans le sous-bloc de données correspondant aux données selon les exigences de la logique de service et avant l'interrogation sur l'état de données de chacun des multiples sous-blocs de données,
comprenant en outre :
la modification de données stockées dans un sous-bloc particulier de données selon la logique de service, et
la synchronisation des données modifiées pour le dispositif de stockage en réseau.

3. Procédé selon la revendication 2, dans lequel la synchronisation des données modifiées pour le dispositif de stockage en réseau comprend :
la scrutation (305) de l'état de données de chacun des multiples sous-blocs de données régulièrement et la synchronisation des données dans un sous-bloc de données pour le dispositif de stockage en réseau quand un état de données du sous-bloc de données est un état de modification ;
dans lequel le procédé comprend en outre de manière facultative, après la synchronisation des données dans le sous-bloc de données pour le dispositif de stockage en réseau :
la modification de l'état de données du sous-bloc de données d'un état de modification à un état normal.

4. Procédé selon la revendication 1, dans lequel le procédé comprend en outre, après la synchronisation des données dans le sous-bloc de données pour le dispositif de stockage en réseau :
la modification de l'état de données du sous-bloc de données d'un état de suppression de pointage à un état normal.

5. Procédé selon la revendication 1, dans lequel le stockage des données stockées dans le dispositif de stockage en réseau dans le sous-bloc de données correspondant aux données selon les exigences de la logique de service comprend :
la sélection d'un sous-bloc de données ayant un état de données d'un état libre à partir de la totalité des multiples sous-blocs de données, et le stockage des données stockées dans le dispositif de stockage en réseau dans le sous-bloc sélectionné de données selon les exigences de la logique de service ;
dans lequel le procédé comprend en outre de manière facultative, après le stockage des données stockées dans le dispositif de stockage en réseau dans le sous-bloc sélectionné de données :
la modification de l'état de données du sous-bloc sélectionné de données d'un état libre à un état de chargement ; et
la modification de l'état de données du sous-bloc sélectionné de données de l'état de chargement à un état normal après que le chargement des données est achevé.

6. Procédé selon l'une quelconque des revendications 1 à 5, dans lequel le procédé comprend en outre, après la configuration de la matrice tampon bidimensionnelle de données pouvant être étendue dans la mémoire partagée locale selon la politique de configuration définie à l'avance :
l'établissement d'une table de relations entre la matrice tampon bidimensionnelle de données et le dispositif de stockage en réseau ; et la mise à jour de la table de relations selon la variation de données dans les sous-blocs de données de la matrice tampon bidimensionnelle de données; la table de relations étant stockée dans le dispositif de stockage en réseau et enregistrant la situation de stockage de données d'enregistrement de chacun des sous-blocs de données de la matrice tampon bidimensionnelle de données ; et chacun des blocs de données logiques dans la matrice tampon bidimensionnelle de données correspondant à une table de relations particulière, et chacun des sous-blocs de données dans le bloc de données logique correspondant à un enregistrement particulier dans la table de relations.

7. Appareil pour stocker des données, comprenant :
une mémoire partagée locale à laquelle on accède par différentes Unités Centrales de Traitement, CPU, dans un système informatique avec des processeurs multiples ;
un module de configuration (701), configuré pour configurer une matrice tampon bidimensionnelle de données pouvant être étendue dans la mémoire partagée locale selon une politique de configuration définie à l'avance; la matrice tampon bidimensionnelle de données comprenant de multiples blocs de données logiques et chacun des multiples blocs de données logiques comprenant de multiples sous-blocs de données pour stocker des données ;
un module de chargement (702), configuré pour stocker des données stockées sur un dispositif de stockage en réseau dans un sous-bloc sélectionné de données correspondant aux données selon les exigences de logique de service ;
et **caractérisé en ce que**
l'appareil comprend en outre :
un module de paramétrage (703), qui, après que le module de configuration a configuré la matrice tampon de données bidimensionnelle pouvant être étendue dans la mémoire partagée locale selon la politique de configuration définie à l'avance et avant que le module de chargement ne stocke les données stockées dans le dispositif de stockage en réseau dans un sous-bloc sélectionné de données correspondant aux données selon les exigences de la logique de service, est configuré pour paramétrer un état de données pour chacun des multiples sous-blocs de données selon la situation de stockage de données dans chacun des multiples sous-blocs de données ; l'état de données comprenant l'un d'un état libre, d'un état de chargement, d'un état normal, d'un état de modification, d'un état de suppression et d'un état de suppression de pointage ;
un module de synchronisation de libération (706), configuré pour, après que le module de chargement a stocké les données stockées sur le dispositif de stockage en réseau dans le sous-bloc sélectionné de données correspondant aux données selon les exigences de la logique de service,
interroger l'état de données de chacun des multiples sous-blocs de données (7061), et pour
synchroniser les données dans un sous-bloc particulier de données pour le dispositif de stockage en réseau, quand un état de données dudit sous-bloc de données particulier interrogé par l'unité d'interrogation est un état de suppression de pointage, dans lequel l'état de données du sous-bloc de données est configuré en tant qu'état de suppression de pointage si la suppression de données pour la mémoire partagée occupée par ledit sous-bloc de données particulier échoue (7062) ; et
un module de libération (707), configuré pour libérer la mémoire partagée correspondant audit sous-bloc de données (7063), après que le module de synchronisation de libération synchronise les données dans le sous-bloc de données pour le dispositif de stockage en réseau.

8. Appareil selon la revendication 7, comprenant en outre :
un module de modification (704), configuré pour, après que l'unité de chargement a stocké les données stockées dans le dispositif de stockage en réseau dans le sous-bloc de données correspondant aux données selon les exigences de la logique de service et avant que le module d'interrogation n'interroge l'état de données de chacun des multiples sous-blocs de données, modifier les données stockées dans un sous-bloc de données particulier selon la logique de service ; et
un module de synchronisation de modification (705), configuré pour, après que l'unité de chargement a stocké les données stockées dans le dispositif de stockage en réseau dans le sous-bloc de données correspondant aux données selon les exigences de la logique de service et avant que le module d'interrogation n'interroge l'état de données de chacun des multiples sous-blocs de données, synchroniser les données modifiées par le module de modification pour le dispositif de stockage en réseau.

9. Appareil selon la revendication 8, dans lequel le module de synchronisation de modification (705) comprend :
une unité de scrutation (7051), configurée pour scruter l'état de données de chacun des multiples sous-blocs de données régulièrement ; et
une unité de synchronisation de modification (7052), configurée pour synchroniser des données dans un sous-bloc de données pour le dispositif de stockage en réseau, quand un état de données du sous-bloc de données scruté par l'unité de scrutation est un état de modification ;
dans lequel le module de synchronisation de modification comprend en outre de manière facultative :
une unité de modification d'état (7053), configurée pour modifier l'état de données du sous-bloc de données d'un état de modification à un état normal.

10. Appareil selon la revendication 7, dans lequel le module de synchronisation de sortie comprend en outre :
une unité de modification d'état (7063), configurée pour modifier l'état de données du sous-bloc de données d'un état de suppression de pointage à un état normal.

11. Appareil selon la revendication 7, dans lequel le module de chargement (702) comprend :
une unité de sélection (7021), configurée pour sélectionner un sous-bloc de données ayant un état de données d'un état libre à partir de la totalité des multiples sous-blocs de données ; et
une unité de chargement (7022), configurée pour stocker les données stockées dans le dispositif de stockage en réseau dans le sous-bloc de données sélectionné par l'unité de sélection selon les exigences de la logique de service ;
dans lequel le module de chargement comprend en outre de manière facultative :
une unité de modification d'état (7023), configurée pour modifier l'état de données du sous-bloc de données sélectionné par l'unité de sélection d'un état libre à un état de chargement ; et la modification de l'état de données du sous-bloc de données sélectionné par l'unité de sélection de l'état de chargement à un état normal après que le chargement des données est achevé.

12. Appareil selon l'une quelconque des revendications 7 à 11, comprenant en outre :
un module d'établissement (708), configuré pour établir une table de relations entre la matrice tampon bidimensionnelle de données et le dispositif de stockage en réseau ; la table de relations étant stockée dans le dispositif de stockage en réseau et enregistrant la situation de stockage de données de chacun des sous-blocs de données de la matrice tampon bidimensionnelle de données ; et
un module de mise à jour (709), pour mettre à jour la table de relations selon la variation de données dans les sous-blocs de données de la matrice tampon bidimensionnelle de données ;
dans lequel chacun des blocs de données logiques dans la matrice tampon de données bidimensionnelle correspond à une table de relations particulière, et chacun des sous-blocs de données dans le bloc de données logique correspond à un enregistrement particulier dans la table de relations.
